(19) Europäisches Patentamt
European Patent Office
Office européen des brevets

(11)  EP 2 220 286 B1

(12)  FASCICULE DE BREVET EUROPEEN

(45) Date de publication et mention
de la délivrance du brevet:
**02.05.2012   Bulletin 2012/18**

(21) Numéro de dépôt: **08854533.0**

(22) Date de dépôt: **14.11.2008**

(51) Int Cl.:
**D06M 11/46** *(2006.01)*   **E06B 9/24** *(2006.01)*
**C03C 25/42** *(2006.01)*   **C09K 21/02** *(2006.01)*
**B01J 35/00** *(2006.01)*   **D06M 15/19** *(2006.01)*

(86) Numéro de dépôt international:
**PCT/FR2008/052059**

(87) Numéro de publication internationale:
**WO 2009/068833 (04.06.2009 Gazette 2009/23)**

(54)  **ELEMENT SOUPLE ET IGNIFUGE POURVU D'UN REVETEMENT PHOTOCATALYTIQUE, SON UTILISATION DANS UN ESPACE INTERIEUR ET SON PROCEDE DE FABRICATION**

BIEGSAMES FEUERFESTES ELEMENT MIT FOTOKATALYTISCHER BESCHICHTUNG, SEINE VERWENDUNG IN EINEM INNENRAUM UND HERSTELLUNGSVERFAHREN DAFÜR

FLEXIBLE FIREPROOF MEMBER WITH PHOTOCATALYTIC COATING, USE THEREOF IN AN INNER SPACE, AND METHOD FOR MAKING SAME

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité:  **14.11.2007   FR 0759037**

(43) Date de publication de la demande:
**25.08.2010   Bulletin 2010/34**

(73) Titulaire: **Porcher Industries**
**38300 Badinières (FR)**

(72) Inventeur: **VERAN, Stéphane**
**F-73100 Aix Les Bains (FR)**

(74) Mandataire: **Colombet, Alain André et al**
**Cabinet Lavoix**
**62, rue de Bonnel**
**69448 Lyon Cedex 03 (FR)**

(56) Documents cités:
**EP-A- 1 188 854    FR-A- 2 748 496**
**FR-A- 2 791 353**

- **LACOMBE TH TRAN-THI C GUILLARD JM HERRMANN S ET AL: "La photocatalyse pour l'élimination des polluants" L'ACTUALITE CHIMIQUE, SOCIETE CHIMIQUE DE FRANCE, PARIS, FR, vol. 308-309, 1 mai 2007 (2007-05-01), pages 79-93, XP009096648 ISSN: 0151-9093 cité dans la demande**
- **XU DONG CHEN, ZHI WANG, ZHENG FU LIAO, YU LIANG MAI, MING QIU ZHANG: "Roles of anatase and rutile TiO2 nanoparticles in photooxidation of polyurethane" POLYMER TESTING, vol. 26, no. 2, avril 2007 (2007-04), pages 202-208, XP002480923 Extrait de l'Internet: URL:http://www.sciencedirect.com/science?_ob=ArticleURL&_udi=B6TXX-4MFJTDW-1&_user=9 87766&_rdoc=1&_fmt=&_orig=search&_sort=d&v iew=c&_acct=C000049880&_version=1&_urlVers ion=0&_userid=987766&md5=6df39d65fa1b31187 6af633b9f9d5b9a> cité dans la demande**

**Description**

La présente invention concerne un élément souple et ignifuge pourvu d'un revêtement photocatalytique, ainsi que son procédé de fabrication.

Au sens de l'invention, un tel élément souple et ignifuge peut assurer une fonction de fermeture ou de protection solaire. Dans ce cas, il s'agit notamment d'un store, ou bien encore d'une banne.

L'élément souple et ignifuge de l'invention peut également assurer une fonction de support d'impression. Dans ce cas, il s'agit par exemple d'une affiche.

Enfin, l'invention trouve également son application à un élément souple et ignifuge, assurant une fonction de revêtement de sol. Dans ce cas, il s'agit par exemple d'une natte.

Le terme souple, désignant l'élément conforme à l'invention, signifie qu'il est possible d'enrouler ce dernier selon un rayon de courbure relativement faible, en particulier nettement inférieur à sa plus grande dimension, par exemple un rayon de courbure $\leq 1$ cm, de préférence $\leq 5$ mm. Dans ces conditions, l'élément conforme à l'invention se différencie des substrats réalisés en matériaux rigides, utilisés notamment dans le domaine du bâtiment. De tels substrats rigides, qui sont par exemple des vitrages ou des matériaux de façade, sont ainsi réalisés notamment en verre, en métal, en ciment, en bois ou en pierre.

L'élément conforme à l'invention présente également un caractère ignifuge. Ceci signifie qu'il est de nature à satisfaire aux différentes normes édictées en la matière, en particulier la norme française M1 NFP 92-503 ou la norme allemande B1 DIN 4102.

L'élément souple et ignifuge conforme à l'invention est habituellement réalisé à partir de différents fils composites, dont chacun comprend une âme continue formée de plusieurs filaments, ainsi qu'une gaine comportant un matériau polymère chloré. Cette âme est notamment réalisée en un matériau inorganique, en particulier en verre, alors que la gaine est notamment formée de polychlorure de vinyle (PVC). Des exemples typiques de tels éléments sont par exemple ceux commercialisés par la Demanderesse sous la référence commerciale SCREENGLASS.

Le procédé de fabrication de l'élément souple, du type ci-dessus, comprend tout d'abord la formation d'un tissu primaire, au sein duquel sont présents les différents fils composites dans leur agencement sensiblement définitif. Ce tissu primaire est alors placé dans un four, où règne une température, par exemple voisine de 150°C, permettant de fixer de façon thermique les différents fils précités, au niveau de leurs zones de jonction, de manière à former l'élément définitif.

L'invention vise plus particulièrement à améliorer de tels éléments souples et ignifuges, de manière qu'ils puissent être employés pour dégrader des composés organiques volatils, ou COV. En effet, les espaces intérieurs, susceptibles d'être équipés au moyen des éléments conformes à l'invention, sont généralement pollués par de tels composés, qui sont issus des matériaux d'ameublement, de décoration ou de construction.

On connait les propriétés photocatalytiques du dioxyde de titane. L'article de S. Lacombe et al. (« La photocatalyse pour l'élimination des polluants », l'actualité chimique, Société Chimique de France, Paris, FR, Vol. 308-309, 1er mai 2007) présente les principes fondamentaux de la photocatalyse ainsi que les avancées et applications récentes dans ce domaine.

A cet égard il est connu, par exemple de FR-A-2 824 846, d'utiliser du dioxyde de titane ($TiO_2$). En effet, lorsque ce dernier est exposé aux ultraviolets, il développe une activité photocatalytique, de sorte qu'il est alors susceptible de dégrader les composés organiques volatils précités.

Cependant, la solution connue de ce document est uniquement applicable à des substrats rigides, qui ne sont pas visés par l'invention, à savoir notamment des vitrages ou des matériaux de façade. Dans ces conditions, l'enseignement de FR-A-2 824 846 ne peut pas être transposé de façon simple à un élément souple, au sens de la présente invention. Par ailleurs, le procédé de fabrication décrit dans ce document implique certains inconvénients, en particulier dans la mesure où il fait appel à un chauffage à une température élevée, voisine de 500°C.

JP-A-1996266864 (Kokai 08-266864) décrit l'application de dioxyde de titane à une étoffe de fils organiques ou inorganiques simples. L'étoffe en fils inorganiques est traitée avec un précurseur de dioxyde de titane et une résine, dans des conditions conduisant à la formation de liaisons Si-O-Ti entre les filaments et le dioxyde de titane. La technologie décrite dans ce document n'est pas compatible avec le domaine des tissus de fils composites.

Dans Polymer Testing 26, 2007 : 202-208, Xu Dong Chen et al. démontrent le rôle photocatalytique de la forme anatase. La forme anatase se révèle photooxydante pour le polyuréthane alors que la forme rutile s'avère avoir un rôle stabilisant, retardant la photooxydation du polymère.

EP-A-1 188 854 concerne l'élimination des odeurs et trouve que le dioxyde de titane n'est pas suffisamment universel dans ce domaine. Le document propose d'employer un oxyde complexe de titane et de silicium et un liant pour revêtir une surface fibreuse. Il écarte les résines uréthane et acryliques au profit de résines silicones ou fluorées.

Ceci étant précisé, l'invention vise à proposer un élément souple et ignifuge, qui autorise une dépollution d'un espace intérieur, e.g. d'une pièce qu'il équipe, moyennant l'utilisation du dioxyde de titane, cet élément souple étant du type réalisé à partir de fils composites formés d'un fil multifilaments et d'un matériau polymère imprégné à coeur (par exemple selon WO-A-03/056082) ou formant une gaine autour du fil (par exemple WO-A-00/56839). L'imprégnation à cœur peut être moussée (par exemple WO-A-2005/052232). Ces fils composites sont employés notamment pour leurs propriétés de résistance mécanique et leur caractère ignifuge et il est fondamental de ne pas altérer ces propriétés dans le temps et donc de ne pas dégrader ni le fil, ni le matériau polymère.

L'invention vise ainsi à proposer un tel élément souple et ignifuge, dont les propriétés mécaniques et la durée de vie ne sont sensiblement pas modifiées par cet ajout de dioxyde de titane.

L'invention vise enfin à mettre en œuvre un procédé de fabrication simple, dans lequel l'étape consistant à ajouter le dioxyde de titane est intégrée de manière commode aux étapes habituelles de réalisation.

A cet effet, elle a pour objet un élément souple et ignifuge, formé de fils composites, dont chacun comprend une âme continue formée de plusieurs filaments, ainsi qu'une gaine périphérique ou une imprégnation à cœur, caractérisé en ce qu'il comprend en outre un enrobage recouvrant ces différents fils, cet enrobage comprenant des particules de dioxyde de titane ayant une activité photocatalytique, dispersées dans un liant organique.

Plus particulièrement, l'invention concerne un élément souple et ignifuge, formé de fils composites, du type comprenant une âme continue formée de plusieurs filaments, ainsi qu'une gaine périphérique.

Par enrobage, on entend que le liant organique et les particules de dioxyde de titane recouvrent les fils de manière continue ou discontinue. L'enrobage peut notamment se concentrer aux intersections des fils et être plus ou moins discontinu. L'enrobage peut donc être assimilé à une imprégnation et est notamment susceptible d'être obtenu par imprégnation, en particulier par foulardage.

L'invention vise notamment l'utilisation d'un élément souple et ignifuge selon l'invention, pour la dégradation ou l'élimination des COV dans un espace intérieur, par exemple pièce d'habitation, bureau, espace professionnel ou industriel, intérieur de véhicule, etc. Cet espace est soumis à la lumière solaire ou à un rayonnement UV approprié.

Selon d'autres caractéristiques :

- le liant organique est propre à ne pas être sensiblement dégradé par l'action photocatalytique des particules de dioxyde de titane ;
- le liant organique est insensible à l'action photocatalytique du dioxyde de titane ;
- le liant organique comprend un ou des additifs favorisant son insensibilité à l'action catalytique du dioxyde de titane ;
- le liant organique, éventuellement additivé, répond positivement au test suivant : prendre un tissu de fils composites, effectuer l'enrobage avec le liant + le dioxyde de titane, sécher, puis tremper le tissu enrobé dans de l'eau additivée de rouge de méthyle à 0,1 % dans le méthanol, exposer le tout à des ultraviolets UV B pendant 12 heures, noter la décoloration sous l'effet des UV B 280 à 315 nm par exemple 313 nm, retirer le tissu, le tremper dans une autre solution similaire, placer sous ultraviolets pendant 12 heures, noter la décoloration, et procéder ainsi de suite, le liant répondant positivement si la décoloration est observée sur 96 heures (soit 8 cycles), de préférence sur 192 heures (soit 16 cycles) ;
- l'enrobage est discontinu, il se concentre essentiellement aux intersections des fils; il est susceptible d'être obtenu par imprégnation ;
- l'élément souple et ignifuge est un élément de protection solaire ou de fermeture, notamment un store ou une banne ;
- l'élément souple et ignifuge est un support d'impression, notamment une affiche ;
- l'élément souple et ignifuge est un revêtement de sol, notamment une natte ;
- le liant est choisi dans la famille constituée par les acryliques, les polyuréthanes, les silicones, les fluorocarbones et les polysilazanes ; les acryliques sont préférés pour leur stabilité à l'oxydation;
- les polyuréthanes sont obtenus à partir de polyol (polyéther, polyester ou polycarbonate) et d'isocyanate aromatique ou aliphatique ; pour la mise en œuvre de l'invention, on préfère éviter les polyuréthane comportant des polyéthers moins stables aux UV et des polyesters moins stables à l'hydrolyse, et l'on préfère avant tout employer des polyuréthane à base de polycarbonates, et mieux encore à base polycarbonates et d'isocyanate aliphatique ;
- pour les silicones, la nature et le nombre de chaînes latérales ou de groupes pendants organiques confèrent de la souplese mais sont source d'oxydation ; l'homme du métier pourra trouver un compromis entre souplesse et résistance à l'oxydation en choisissant les polymères silicone pour qu'ils soient stables ou en les additivant, par exemple avec des résines silicate ;
- les particules de dioxyde de titane sont de taille nanométrique et ont une structure cristallographique majoritairement (plus de 60%, notamment plus de 70, 80 ou 90%) de type anatase ; les particules ont notamment une taille moyenne comprise entre 1 et 100 nm ;
- l'épaisseur de l'enrobage est comprise entre 1 et 1000 nm (nanomètres) ;
- au sein de l'enrobage, la fraction massique du liant organique est comprise entre 30 et 95 %, de préférence entre 30 et 50 %, alors que la fraction massique des particules de dioxyde de titane est comprise entre 5 et 70 %, de préférence entre 50 et 70 % ;
- la fraction massique de l'enrobage, par rapport au poids total de l'élément de fermeture ou de protection solaire, est comprise entre 0,1 et 10 %, de préférence entre 0,5 et 5 % ;

- l'âme continue de chaque fil composite est réalisée en un matériau inorganique, en particulier en verre ou silice ;
- l'âme continue de chaque fil composite est réalisée en un matériau organique, typiquement il s'agit de polyoléfines, de polyesters, de polyamides, de polyvinyles, d'acryliques ;
- l'âme continue de chaque fil composite est réalisée en un matériau d'origine naturelle, par exemple du lin ou du coton et de préférence du lyocell
- la gaine de chaque fil composite comprend un polymère chloré, notamment du polychlorure de vinyle (PVC), un élastomère silicone, ou un acrylique ; les polymères chlorés ou les acryliques sont avantageusement plastifié ; ils se présentent de préférence sous forme de plastisol ;
- cet élément comprend un tissage desdits fils composites ;
- le coefficient d'ouverture du tissage est compris entre 1 et 10 %, de préférence entre 3 et 5 %.

Pour conférer les propriétés conférant au fil composite selon l'invention, sa capacité à être manipulé, mis en oeuvre et notamment tissé, il est d'usage de constituer une certaine épaisseur de matériau polymère autour du fil continu. On appelle notamment taux d'emport, le taux d'imprégnation du fil et il est défini par la formule suivante :

$$\frac{\text{poids du fil enduit} - \text{poids du fil}}{\text{poids du fil enduit}} \times 100$$

Selon l'invention, le fil continu est de préférence enduit par un procédé d'enduction avec le matériau polymère.

Selon l'invention, l'enduction est susceptible d'être effectuée avec une préparation liquide de monomère ou de polymère. Suivant une première méthode, une préparation liquide de polymère est obtenue par fusion d'un polymère, par mélange avec un plastifiant, ou par dispersion, par exemple sous forme de plastisol. Suivant une deuxième méthode, une préparation liquide de monomère est constituée d'un monomère liquide qui polymérisera sous l'effet d'une source d'énergie, telle que la chaleur ou une irradiation, e.g. irradiation UV.

Ces procédés d'enduction, et notamment à partir d'un polymère plastifié et notamment d'une dispersion du type plastisol, permettent d'obtenir les meilleurs taux d'emport.

Le taux d'emport de polymère est avantageusement compris entre 50 et 300 %. Il est de préférence compris entre 100 et 200 %.

L'invention a également pour objet un procédé de réalisation de l'élément ci-dessus, dans lequel on réalise un tissu primaire, formé par un agencement des fils composites dans leur disposition sensiblement finale, et on fixe par effet thermique ces différents fils les uns par rapport aux autres, caractérisé en ce que ce procédé comprend en outre des étapes intermédiaires de préparation de l'enrobage et d'application de cet enrobage sur le tissu primaire, cet enrobage étant solidarisé aux fils composites lors de ladite étape de fixation par effet thermique de ces fils les uns par rapport aux autres.

Selon une autre caractéristique, on prépare l'enrobage sous forme d'une solution liquide, de type bain.

L'enrobage peut être effectué par imprégnation du tissu primaire avec un bain de liant et de particules, notamment par foulardage, c'est-à-dire imprégnation, puis exprimage.

L'invention va être décrite ci-après, en référence aux dessins annexés, donnés uniquement à titre d'exemple non limitatif, dans lesquels :

- la figure 1 est une vue de face, illustrant de façon schématique un store conforme à l'invention ;
- la figure 2 est une vue de face, à plus grande échelle, illustrant de manière plus précise différents fils appartenant à ce store ;
- la figure 3 est une vue en coupe longitudinale, à plus grande échelle, illustrant différents fils appartenant à ce store, ainsi qu'un enrobage recouvrant ces fils ;
- la figure 4 est un agrandissement de la zone IV de la figure 3 ; et
- la figure 5 est une vue schématique, illustrant un procédé de fabrication du store des figures précédentes.

Par formulation, on entend tout mélange comportant au moins un produit par exemple dispersion, solution, mélange de monomères et/ou d'oligomères.

Par dispersion de polymère, on entend toute préparation de polymère à l'état divisé, comprenant éventuellement des additifs, dans un liquide organique ou non.

Par plastifié, on entend un polymère contenant un agent plastifiant.

Par « plastisol », on entend une dispersion de polymères, et éventuellement de charges et autres additifs éventuels, à l'état finement divisé, dans un plastifiant ou système plastifiant.

Suivant une modalité de l'invention, le matériau polymère constitué autour de l'âme est un polymère plastifié.

Suivant une modalité préférée, le matériau polymère constitué autour de l'âme est un plastisol.

Le matériau polymère constitué autour de l'âme est de préférence un polymère chloré ou acrylique transparent ou translucide.

A titre de matériau polymère chloré, on peut utiliser conformément à l'invention, toute résine susceptible d'être plastifiée, et notamment pouvant être de ce fait mise en oeuvre sous forme de plastisol.

Par matériau polymère chloré, on entend un polymère chloré pur ou un copolymère de chlorure de vinyle copolymérisé avec d'autres monomères, ou encore un polymère chloré qui est allié avec d'autres polymères.

Parmi les monomères qui peuvent être copolymérisés avec le chlorure de vinyle, on citera notamment des oléfines comme par exemple l'éthylène, des esters vinyliques d'acides carboxyliques saturés, comme l'acétate de vinyle, le butyrate de vinyle ou les maléates ; des dérivés vinyliques halogénés comme, par exemple, le chlorure de vinylidène, des esters d'acide acrylique ou méthacrylique comme, par exemple, l'acrylate de butyle.

A titre de polymère chloré, on citera par exemple le polychlorure de vinyle (PVC), mais aussi les PVC surchlorés, les polychlorures de vinylidène et les polyoléfines chlorées.

De manière préférentielle, mais non exclusive, le matériau polymère chloré selon la présente invention a une teneur pondérale en halogène comprise entre 40 et 70 %.

A titre de matériau ou résine acrylique, on peut utiliser tout polymère synthétique dérivé de l'acide propénoïque permettant d'obtenir un polymère transparent (translucide).

La résine acrylique peut être un homopolymère ou un copolymère à base de méthacrylate de méthyle.

Pour former un matériau polymère plastifié ou un plastisol, la résine acrylique contient avantageusement un plastifiant de type phosphate ou de type mixte phosphate/phtalate.

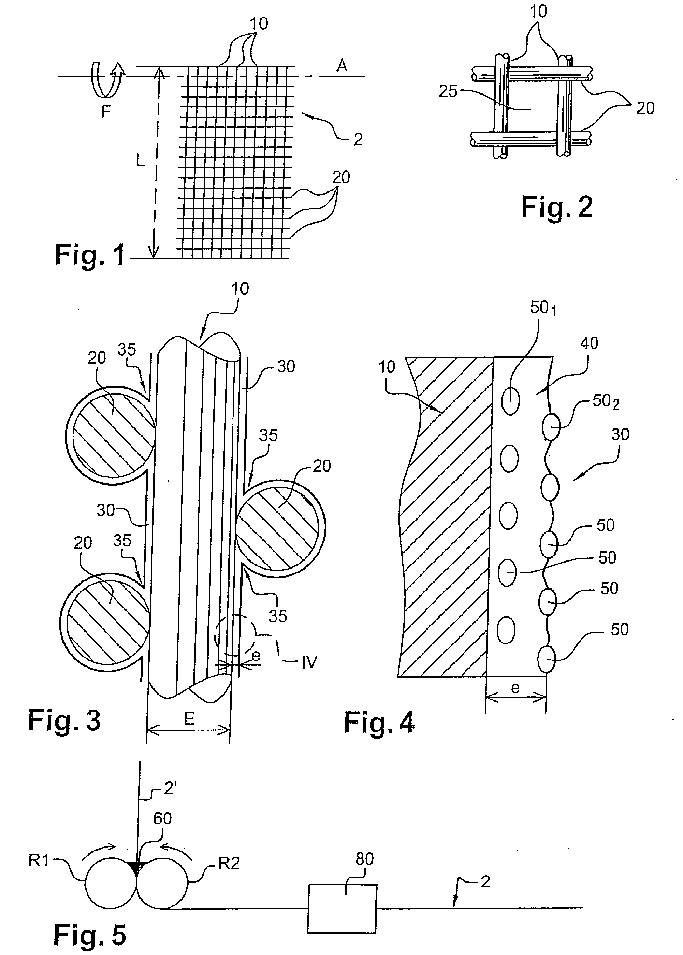

La figure 1 illustre, de façon schématique, un store conforme à l'invention, qui est désigné dans son ensemble par la référence 2. Comme on l'a vu dans ce qui précède, l'invention trouve son application à des éléments de protection solaire ou de fermeture, qui sont différents d'un store. Elle trouve également son application à des éléments souples et ignifuges qui n'assurent pas une telle fonction de protection solaire ou de fermeture, mais au contraire une fonction de support d'impression, ou encore de revêtement de sol.

Le store 2 comprend tout d'abord, de manière habituelle, différents fils tissés. On retrouve ainsi des fils verticaux 10, s'étendant selon la dimension principale du store, ainsi que des fils horizontaux 20, s'étendant selon sa dimension transversale.

Ces fils, de nature composite, comprennent de manière habituelle une âme continue formée de plusieurs filaments, réalisés notamment en un matériau inorganique, tel que du verre, ou en un matériau organique, tel que du polyester. Cette âme est entourée par une gaine réalisée par exemple en polychlorure de vinyle (PVC), en un élastomère silicone, ou encore en un acrylique plastifié.

Ce store 2 est de nature souple, à savoir qu'il peut être enroulé sur lui-même autour d'un axe transversal A, selon la flèche F. Dans ces conditions, il est susceptible d'adopter un rayon de courbure nettement inférieur à sa longueur L, sans cependant perdre son intégrité mécanique (par exemple un rayon de courbure $\leq$ 1 cm, de préférence $\leq$ 5 mm).

La figure 2 illustre de manière plus précise plusieurs fils respectivement verticaux 10 et horizontaux 20. Deux fils verticaux adjacents forment, avec deux fils horizontaux adjacents, une succession d'ouvertures 25. De façon avantageuse, le coefficient d'ouverture qui leur est associé, tel que défini dans la norme française EN 14501, est compris entre 1 et 10%, de préférence entre 3 et 5%.

La figure 3 illustre de façon plus précise un fil vertical 10, ainsi que trois fils horizontaux 20, disposés de manière alternée contre la surface extérieure de ce fil vertical 10. Conformément à l'invention, il est en outre prévu un enrobage, qui recouvre ces différents fils 10 et 20. Cet enrobage est illustré de façon schématique sur cette figure 3, où il est affecté dans son ensemble de la référence 30. On notera que cet enrobage recouvre sensiblement l'intégralité de la surface de ces fils, à savoir que globalement aucune zone de ces derniers ne se trouve en contact avec l'air ambiant. Cet enrobage est en particulier présent au niveau des interstices 35, formés à chaque intersection de fils.

La figure 4, qui est un agrandissement de la zone IV de la figure 3, illustre plus particulièrement cet enrobage 30, ainsi que la zone du fil 10 qui lui est adjacente. On notera que, sur ces figures 3 et 4, les échelles respectives des fils et de l'enrobage ne correspondent pas à la réalité, à savoir l'épaisseur de l'enrobage est augmentée, dans un but de clarté.

Comme l'illustre la figure 4, l'enrobage 30 se compose d'un liant 40, qui forme une phase homogène et continue, ainsi que de particules 50 de dioxyde de titane ($TiO_2$). Ces particules 50 sont dispersées de manière régulière dans le liant, selon les trois dimensions de ce dernier.

Le liant 40 est de nature organique. Il est choisi par exemple dans la famille des acryliques, des polysilazanes, des silicones et des fluorocarbones.

Les particules 50 de dioxyde de titane nanométriques et d'une structure cristallographique majoritairement de type anatase présentent une action photocatalytique. Dans ce cas, leur plus grande dimension est par exemple comprise entre 10 et 50 nm. Ces particules nanométriques, qui sont d'un type connu en soi, sont par exemple décrites dans Benrath, A. ; Z. Wiss. Phot. 14,217-Renz.C. ; Helv.Chim.Acta 4,962.

En référence à la figure 4, l'enrobage 30 présente une épaisseur e sensiblement constante, qui est de l'ordre de 1 à 1000 nm (nanomètres). Par ailleurs, l'épaisseur E de chaque fil est habituellement voisine de 0,3 à 0,4 mm (millimètres).

Au sein de l'enrobage 30, la fraction massique de liant 40 est comprise entre 30 et 95 %, de préférence entre 30 et 50 %, alors que la fraction massique de particules de dioxyde de titane 50 est comprise entre 5 et 70 %, de préférence entre 50 et 70 %. Enfin, la fraction massique de l'enrobage 30 par rapport à l'ensemble du store 2 est comprise entre 0,1 et 10 %, de préférence entre 0,5 et 5 %.

En service, les ultraviolets atteignant la surface extérieure du store 2 contribuent à exciter les particules 50 de dioxyde de titane, de manière connue en soi. Ceci conduit à la destruction, selon un phénomène chimique habituel, d'une fraction substantielle des composés organiques volatils présents, à savoir entre autres des aldéhydes (e.g. formaldéhyde, acétaldéhyde), des cétones (e.g. acétone), des alcanes (e.g. n-heptane), des aromatiques (e.g. benzène, o-xylène). A cet égard on notera que le liant, en dépit de sa nature organique, n'est avantageusement pas détruit par l'action photocatalytique du dioxyde de titane.

De plus, il est à souligner que le liant, qui présente une certaine épaisseur, contribue à absorber les ultraviolets. Par conséquent, les particules notées $50_1$, à savoir celles qui sont proches du fil 10, ont tendance à être nettement moins activées que les particules $50_2$, qui peuvent faire partiellement saillie à l'extérieur de la surface de l'enrobage 30. Dans ces conditions, l'action photocatalytique de ces particules $50_1$, voisines du fil, est relativement faible de sorte qu'elle n'a pas tendance à affecter l'intégrité de ce fil. On notera également que la présence de l'enrobage assure une protection du fil à l'égard des ultraviolets eux-mêmes.

Le procédé de fabrication du store 2, décrit ci-dessus, va maintenant être explicité en référence à la figure 5.

Comme l'illustre cette dernière, il s'agit tout d'abord de réaliser un tissu primaire 2', de façon connue en soi, qui est vu de côté sur cette figure 5. Ce tissu primaire comprend les fils 10 et 20, agencés selon leur disposition sensiblement finale. On notera cependant que ce tissu primaire est dépourvu de l'enrobage 30.

Puis, on fait passer ce tissu primaire 2' entre deux rouleaux R1 et R2, tournant en sens inverse. A leur partie supérieure, ces deux rouleaux délimitent un espace intermédiaire, dans lequel est reçu un bain 60 comprenant le liant 40 et les particules 50 de dioxyde de titane, mentionnés ci-dessus. Ce bain comprend en outre de l'eau, ainsi que des agents classiques, destinés à assurer le bon fonctionnement du liant, tel un durcisseur et un catalyseur.

Il est à noter que, de manière optionnelle, on peut inclure des additifs supplémentaires dans ce bain, afin de conférer des propriétés supplémentaires au store final. Ces additifs peuvent ainsi assurer une fonction de déperlance, de filtres ultraviolets ou encore de filtre infrarouges. Le tissu primaire 2', revêtu de l'enrobage 30, est ensuite dirigé vers un four 80, de type classique. L'épaisseur de l'enrobage est fixée par l'extrait sec du bain, qui est typiquement compris entre 5 et 50%.

Dans le four, où règne une température modérée, par exemple voisine de 150°C, les fils 10 et 20 sont fixés mutuellement au niveau de leurs jonctions respectives, selon l'étape classique utilisée dans l'état de la technique. De plus, lors de cette fixation thermique des fils, l'enrobage se trouve d'une part séché, et d'autre part solidarisé par rapport aux fils 10 et 20. Ainsi, au terme de cette étape de traitement thermique, on retrouve le store définitif 2 en aval du four 80.

L'invention permet d'atteindre les objectifs précédemment mentionnés.

En effet, dans l'art antérieur illustré par FR-A-2 824 846, il est fait appel à un liant minéral qui est certes adapté aux substrats rigides, mais en revanche pas à ceux de nature souple visés par l'invention. Dans ces conditions, il est du mérite de la Demanderesse d'avoir identifié un type de liants qui, grâce à sa nature organique, est susceptible d'assurer une liaison durable des particules de dioxyde de titane par rapport aux fils composites, à savoir qui ne soit pas fragilisée par les mouvements de l'élément souple. Par ailleurs, il est également du mérite de la Demanderesse d'avoir identifié certains types de liants qui, de façon surprenante, sont susceptibles de résister à l'action photocatalytique du dioxyde de titane, en dépit de leur nature organique.

Le procédé conforme à l'invention présente également des avantages spécifiques. En effet, l'ajout d'une étape de dépôt d'un bain, comprenant le dioxyde de titane et le liant, ne modifie sensiblement pas les autres étapes classiques de formation d'un tissu primaire, ainsi que de fixation par traitement thermique des fils entre eux. Par ailleurs, on notera que cette étape, permettant de fixer mutuellement les fils, assure de façon simultanée la solidarisation de l'enrobage par rapport à ces fils.

De plus, le procédé de l'invention fait intervenir un chauffage à une gamme de températures relativement basses, généralement inférieures à 200°C. Ceci est à comparer avec l'enseignement de l'état de la technique, illustré notamment par FR-A-2 824 846, qui nécessite d'atteindre des températures nettement plus élevées, par exemple voisines de 500°C. Enfin, la présence de l'enrobage, à la surface extérieure des fils, confère également des propriétés anti-salissures.

La mise en oeuvre de l'invention va être illustrée, au moyen des exemples de réalisation suivants.

Exemple 1

On prépare tout d'abord un premier bain, en dispersant 35,4 g de dioxyde de titane à activité photocatalytique, dans 64,8 g de polymère fluoré et 99,8 g d'eau. Ce dioxyde de titane est conforme à celui commercialisé sous la référence Degussa VP Disp 740 X, alors que le polymère fluoré est conforme à celui commercialisé sous la référence Clariant Nuva 2110. L'extrait sec de ce premier bain est de 9,6%.

On fait passer alors un tissu, dit de base, dans ce premier bain, à une vitesse de passage de 1,5 m par minute, avec une pression des rouleaux de 3 bars, et une température d'un four de 115°C. Ce tissu de base est formé de fils de verre enduits de PVC, le diamètre des fils étant de 0,3 micromètre, leur titre étant de 97 tex, et leur ouverture de 4%. Le taux d'emport du bain est de 1,0%. On obtient un premier tissu traité dénommé « tissu 1 ».

S'agissant de l'enrobage, le taux d'emport est définit par la formule suivante :

$$\frac{poids\ du\ tissu\ de\ base\ enrobé - poids\ du\ tissu\ de\ base}{poids\ du\ tissu\ de\ base\ enrobé} x100$$

On prépare en outre un deuxième bain, en dispersant 35,4 g de dioxyde de titane photocatalytique dans 25,0 g de silicone, 5,0 g de catalyseur et 134,6 g d'eau. Le dioxyde de titane est le même que celui employé dans le premier essai, la matière silicone est conforme à celle commercialisée sous la référence Dow Corning 75 SF, alors que le catalyseur est conforme à celui commercialisé sous la référence Dow Corning Catalyst 62. L'extrait sec du bain est de 10,7%.

On fait passer le même tissu de base, que celui du premier essai, avec la même vitesse de passage et la même température de four, le taux d'emport étant de 0,70%. On obtient alors un second tissu dénommé « tissu 2 ».

Enfin, on prépare un troisième bain, en dispersant 35,4 g de dioxyde de titane photocatalytique dans 31,5 g d'acrylique, 1,6 g de durcisseur et 231,5 g d'eau. Le dioxyde de titane est le même que celui employé précédemment, l'acrylique est conforme à celle commercialisée sous la référence Proteset AM 185 RS, le durcisseur est conforme à celui commercialisé sous la référence Proteset M370 L, l'extrait sec du bain étant de 9,9%.

On fait passer le même tissu de base que précédemment dans ce troisième bain, selon la même vitesse de passage et la même température de four, le taux d'emport étant de 1,2%. On obtient alors un troisième tissu traité, dénommé « tissu 3 ».

Puis, les tissus 1 à 3, ainsi qu'un tissu témoin formé par le tissu de base évoqué ci-dessus sont placés au sein de quatre flacons, avec l'eau additivée d'un pigment organique, en l'occurrence du rouge de méthyle à 0,1% dans le méthanol. On place alors ces quatre flacons sous ultraviolets pendant 12 heures (chambre UVCON, UV B, longueur d'onde 313 nm).

Au terme de ces 12 heures, le pigment est absorbé sur le tissu témoin, et ce pigment a subi une légère décoloration sous l'effet des ultraviolets. En revanche, les trois tissus traités conformément à l'invention ont dégradé le pigment organique, à savoir que l'eau additivée, dans laquelle ils sont plongés, est désormais incolore. Ceci permet de mettre en exergue l'effet photocatalytique du dioxyde de titane.

En répétant plusieurs fois ces expériences, on arrive à un temps total d'exposition des tissus aux ultraviolets voisin de 200 heures. Au terme de cette durée, les tissus traités conformément à l'invention conservent leur action photocatalytique, à savoir que l'eau additivée dans laquelle ils sont plongés conserve son absence de coloration.

En changeant de bain à chaque fois, on peut contrôler la bonne conservation du tissu enrobé et dont la stabilité de l'enrobage et du fil composite formant le tissu de base.

Les essais réalisés ci-dessus, en plaçant le tissu dans de l'eau additivée d'un pigment organique, sont analogues à ceux que l'on obtiendrait en plaçant ces mêmes tissus dans l'atmosphère, au contact de composés organiques volatils. Dans ce dernier cas, l'excitation des ultraviolets serait donnée par la lumière du soleil, frappant le store formé par l'un ou l'autre des tissus.

Exemple 2:

On évalue la performance de purification de l'air par un tissu photocatalytique selon l'invention en exposant un échantillon de ce dernier à un air pollué et sous irradiation UV (UV B, longueur d'onde 280-315 nm). L'air est pollué par l'un des contaminants suivants : formaldéhyde, acétaldéhyde, toluène, heptane, acétane.

L'échantillon photocatalytique, placé dans une enceinte étanche, sous irradiation UV, adsorbe et oxyde les polluants pour former du dioxyde de carbone. La performance de purification de l'air est évaluée en mesurant la disparition du polluant dans l'enceinte par des techniques analytiques appropriées. Les capacités d'adsorption du matériau sont préalablement mesurées par un test sans irradiation UV. Le polluant est introduit à un taux compris entre 250 et 1000 ppb.

**Revendications**

1. élément souple et ignifuge formé de fils composites (10, 20) assemblés en tissu, dont chacun comprend une âme continue formée de plusieurs filaments, ainsi qu'une gaine périphérique ou une imprégnation à coeur, **caractérisé en ce qu'**il comprend en outre un enrobage (30) recouvrant ces différents fils (10, 20), cet enrobage comprenant des particules (50) de dioxyde de titane ($TiO_2$) ayant une activité photocatalytique, dispersées dans un liant organique (40).

2. Elément souple et ignifuge selon la revendication 1, **caractérisé en ce qu'**il s'agit d'un élément de protection solaire ou de fermeture, notamment un store (2) ou une banne.

3. Elément souple et ignifuge selon la revendication 1, **caractérisé en ce qu'**il s'agit d'un support d'impression, notamment une affiche.

4. Elément souple et ignifuge selon la revendication 1, **caractérisé en ce qu'**il s'agit d'un revêtement de sol, notamment une natte.

5. Elément souple et ignifuge selon l'une quelconque des revendications 1 à 4, **caractérisé en ce que** le liant est choisi dans la famille constituée par les acryliques, les silicones, les fluorocarbones et les polysilazanes.

6. Elément souple et ignifuge selon l'une quelconque des revendications 1 à 4, **caractérisé en ce que** le liant est choisi parmi les polyuréthanes à base de polycarbonates, de préférence à base polycarbonate et d'isocyanate aliphatique.

7. Elément souple et ignifuge selon l'une quelconque des revendications précédentes, **caractérisé en ce que** les particules de dioxyde de titane (50) sont de taille nanométrique et ont une structure cristallographique majoritairement de type anatase.

8. élément souple et ignifuge selon l'une quelconque des revendications précédentes, **caractérisé en ce que** l'épaisseur (e) de l'enrobage (30) est comprise entre 1 et 1000 nm (nanomètres).

9. Elément souple et ignifuge selon l'une quelconque des revendications précédentes, **caractérisé en ce que**, au sein de l'enrobage (30), la fraction massique du liant organique (40) est comprise entre 30 et 95 %, de préférence entre 30 et 50 %, alors que la fraction massique des particules de dioxyde de titane (50) est comprise entre 5 et 70 %, de préférence entre 50 et 70 %.

10. Elément souple et ignifuge selon l'une quelconque des revendications précédentes, **caractérisé en ce que** la fraction massique de l'enrobage (30), par rapport au poids total de l'élément de fermeture ou de protection solaire (2), est comprise entre 0.1 et 10 %, de préférence entre 0,5 et 5 %.

11. Elément souple et ignifuge selon l'une quelconque des revendications précédentes, **caractérisé en ce que** l'âme continue de chaque fil composite (10, 20) est réalisée en un matériau inorganique, en particulier en verre.

12. Elément souple et ignifuge selon l'une quelconque des revendications précédentes, **caractérisé en ce que** la gaine de chaque fil composite (10, 20) comprend du polychlorure de vinyle (PVC), un élastomère silicone, ou un acrylique plastifié.

13. Elément souple et ignifuge selon l'une quelconque des revendications précédentes, **caractérisé en ce que** cet élément comprend un tissage desdits fils composites (10, 20).

14. Elément souple et ignifuge selon la revendication 13, **caractérisé en ce que** le coefficient d'ouverture du tissage est compris entre 1 et 10 %, de préférence entre 3 et 5 %.

15. Utilisation d'un élément souple et ignifuge selon l'une quelconque des revendications précédentes, pour la dégradation ou l'élimination des COV dans un espace intérieur, par exemple pièce d'habitation, bureau, espace professionnel ou industriel, intérieur de véhicule.

16. Procédé de réalisation de l'élément souple et ignifuge conforme à l'une quelconque des revendications précédentes, dans lequel on réalise un tissu primaire (2'), formé par un agencement des fils composites (10, 20) dans leur disposition sensiblement finale, et on fixe par effet thermique ces différents fils les uns par rapport aux autres, **caractérisé en ce que** ce procédé comprend en outre des étapes intermédiaires de préparation de l'enrobage (30) et d'application de cet enrobage sur le tissu primaire (2'), cet enrobage étant solidarisé aux fils composites lors de ladite étape de fixation par effet thermique de ces fils les uns par rapport aux autres.

17. Procédé selon la revendication 16, **caractérisé en ce qu'**on prépare l'enrobage sous forme d'une solution liquide, de type bain (60).

## Claims

1. Flexible flame-retardant element formed by composite threads (10, 20) which are assembled in a fabric, each of which comprises a continuous core formed by a plurality of filaments, as well as a peripheral sheath or core impregnation, **characterised in that** it additionally comprises a coating (30) which covers these different threads (10, 20), this coating comprising particles (50) of titanium dioxide (TiO$_2$) which have photocatalytic activity and are dispersed in an organic binding agent (40).

2. Flexible flame-retardant element according to claim 1, **characterised in that** it is an element for protection against the sun or for closure, and in particular a blind (2) or an awning.

3. Flexible flame-retardant element according to claim 1, **characterised in that** it is a print support, and in particular a poster.

4. Flexible flame-retardant element according to claim 1, **characterised in that** it is a floor covering, and in particular a mat.

5. Flexible flame-retardant element according to any one of claims 1 to 4, **characterised in that** the binding agent is selected from the family constituted by acrylics, silicones, fluorocarbons and polysilazanes.

6. Flexible flame-retardant element according to any one of claims 1 to 4, **characterised in that** the binding agent is selected from amongst polyurethanes based on polycarbonates, and preferably based on polycarbonate and aliphatic isocyanate.

7. Flexible flame-retardant element according to any one of the preceding claims, **characterised in that** the titanium dioxide particles (50) are of nanometric size, and have a crystallographic structure which is mainly of an octahedrite type.

8. Flexible flame-retardant element according to any one of the preceding claims, **characterised in that** the thickness (e) of the coating (30) is between 1 and 1000 nm (nanometres).

9. Flexible flame-retardant element according to any one of the preceding claims, **characterised in that**, within the coating (30), the fraction by weight of the organic binding agent (40) is between 30 and 95%, and preferably between 30 and 50%, whereas the fraction by weight of the titanium dioxide particles (50) is between 5 and 70%, and preferably between 50 and 70%.

10. Flexible flame-retardant element according to any one of the preceding claims, **characterised in that** the fraction by weight of the coating (30) relative to the total weight of the element (2) for protection against the sun or for closure is between 0.1 and 10%, and preferably between 0.5 and 5%.

11. Flexible flame-retardant element according to any one of the preceding claims, **characterised in that** the continuous core of each composite thread (10, 20) is made of an inorganic material, and in particular of glass.

12. Flexible flame-retardant element according to any one of the preceding claims, **characterised in that** the sheath of each composite thread (10, 20) comprises polyvinyl chloride (PVC), a silicone elastomer, or a plasticised acrylic.

13. Flexible flame-retardant element according to any one of the preceding claims, **characterised in that** this element comprises weaving of the said composite threads (10, 20).

**14.** Flexible flame-retardant element according to claim 13, **characterised in that** the coefficient of opening of the weaving is between 1 and 10%, and preferably between 3 and 5%.

**15.** Use of a flexible flame-retardant element according to any one of the preceding claims for degradation or elimination of the volatile organic compounds in an interior space, for example a room in a dwelling, an office, a professional or industrial space, or the interior of a vehicle.

**16.** Method for production of the flexible flame-retardant element according to any one of the preceding claims, wherein there is production of a primary fabric (2') which is formed by an arrangement of the composite threads (10, 20) in their substantially final layout, and these different threads are fixed relative to one another by thermal effect, **characterised in that** this method additionally comprises intermediate steps of preparation of the coating (30) and application of this coating onto the primary fabric (2'), this coating being rendered integral with the composite threads during the said step of fixing of these threads relative to one another by thermal effect.

**17.** Method according to claim 16, **characterised in that** the coating is prepared in the form of a liquid solution, of the bath type (60).

**Patentansprüche**

**1.** Biegsames feuerfestes Element aus Verbundfasern (10, 20), die zu einem Gewebe zusammengefügt sind, wobei jede von ihnen einen durchgehenden Kern, der aus mehreren Filamenten gebildet ist, sowie einen Umfangsmantel oder eine Durchimprägnierung aufweist, **dadurch gekennzeichnet, dass** es ferner eine Beschichtung (30) umfasst, die diese verschiedenen Fasern (10, 20) bedeckt, wobei diese Beschichtung Partikel (50) aus Titandioxid ($TiO_2$) umfasst, die eine fotokatalytische Aktivität aufweisen und in einem organischen Bindemittel (40) verstreut sind.

**2.** Biegsames feuerfestes Element nach Anspruch 1, **dadurch gekennzeichnet, dass** es sich um ein Sonnenschutz- oder Verschlusselement, insbesondere einen Vorhang (2) oder eine Markise, handelt.

**3.** Biegsames feuerfestes Element nach Anspruch 1, **dadurch gekennzeichnet, dass** es sich um einen Druckträger, insbesondere ein Plakat, handelt.

**4.** Biegsames feuerfestes Element nach Anspruch 1, **dadurch gekennzeichnet, dass** es sich um eine Bodenabdeckung, insbesondere eine Matte, handelt.

**5.** Biegsames feuerfestes Element nach einem der Ansprüche 1 bis 4, **dadurch gekennzeichnet, dass** das Bindemittel in der Familie ausgewählt wird, die von den Acrylen, den Silikonen, den Fluorkarbonaten und den Polysilazanen gebildet ist.

**6.** Biegsames feuerfestes Element nach einem der Ansprüche 1 bis 4, **dadurch gekennzeichnet, dass** das Bindemittel unter den Polyurethanen auf Basis von Polykarbonaten, vorzugsweise auf Basis von Polykarbonat und aliphatischem Isozyanat, ausgewählt wird.

**7.** Biegsames feuerfestes Element nach einem der vorhergehenden Ansprüche, **dadurch gekennzeichnet, dass** die Titandioxidpartikel (50) Nanometergröße haben und eine kristallographische Struktur mehrheitlich des Typs Anatas aufweisen.

**8.** Biegsames feuerfestes Element nach einem der vorhergehenden Ansprüche, **dadurch gekennzeichnet, dass** die Dicke (e) der Beschichtung (30) zwischen 1 und 1000 nm (Nanometer) beträgt.

**9.** Biegsames feuerfestes Element nach einem der vorhergehenden Ansprüche, **dadurch gekennzeichnet, dass** innerhalb der Beschichtung (30) der Masseanteil des organischen Bindemittels (40) zwischen 30 und 95 %, vorzugsweise zwischen 30 und 50 %, beträgt, während der Masseanteil der Titandioxidpartikel (50) zwischen 5 und 70 %, vorzugsweise zwischen 50 und 70 %, beträgt.

**10.** Biegsames feuerfestes Element nach einem der vorhergehenden Ansprüche, **dadurch gekennzeichnet, dass** der Masseanteil der Beschichtung (30) bezogen auf das Gesamtgewicht des Verschluss- oder Sonnenschutzelements (2) zwischen 0,1 und 10 %, vorzugsweise zwischen 0,5 und 5 %, beträgt.

**11.** Biegsames feuerfestes Element nach einem der vorhergehenden Ansprüche, **dadurch gekennzeichnet, dass** der durchgehende Kern jeder Verbundfaser (10, 20) aus einem anorganischen Material, insbesondere Glas, hergestellt ist.

**12.** Biegsames feuerfestes Element nach einem der vorhergehenden Ansprüche, **dadurch gekennzeichnet, dass** der Mantel jeder Verbundfaser (10, 20) Vinylpolychlorid (PVC), ein Silikonelastomer oder ein plastifiziertes Acryl umfasst.

**13.** Biegsames feuerfestes Element nach einem der vorhergehenden Ansprüche, **dadurch gekennzeichnet, dass** dieses Element ein Gewebe aus den Verbundfasern (10, 20) umfasst.

**14.** Biegsames feuerfestes Element nach Anspruch 13, **dadurch gekennzeichnet, dass** der Öffnungskoeffizient des Gewebes zwischen 1 und 10 %, vorzugsweise zwischen 3 und 5 %, liegt.

**15.** Verwendung eines biegsamen feuerfesten Elements nach einem der vorhergehenden Ansprüche für den Abbau oder die Beseitigung der COV in einem Innenraum, beispielsweise einer Wohnung, einem Büro, einem Berufs- oder Industriestandort, einem Fahrzeuginnenraum.

**16.** Verfahren zur Herstellung des biegsamen feuerfesten Elements nach einem der vorhergehenden Ansprüche, bei dem ein Primärgewebe (2') hergestellt wird, das von einer Anordnung von Verbundfasern (10, 20) in ihrer im Wesentlichen endgültigen Anordnung gebildet ist, und durch thermische Wirkung diese verschiedenen Fasern aneinander befestigt werden,
**dadurch gekennzeichnet, dass** das Verfahren ferner Zwischenschritte der Vorbereitung der Beschichtung (30) und des Aufbringens dieser Beschichtung auf das Primärgewebe (2') umfasst, wobei diese Beschichtung an den Verbundfasern während des Schrittes der Befestigung dieser Fasern aneinander durch Wärmewirkung angebracht wird.

**17.** Verfahren nach Anspruch 16, **dadurch gekennzeichnet, dass** die Beschichtung in Form einer flüssigen Lösung des Typs Bad (60) vorbereitet wird.

**Fig. 1**

**Fig. 2**

**Fig. 3**

**Fig. 4**

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2824846 A
- JP 1996266864 A
- JP KOKAI08266864 A
- EP 1188854 A
- WO 03056082 A
- WO 0056839 A
- WO 2005052232 A

**Littérature non-brevet citée dans la description**

- **S. LACOMBE et al.** La photocatalyse pour l'élimination des polluants. *l'actualité chimique,* 01 Mai 2007, vol. 308-309
- **XU DONG CHEN.** *Polymer Testing,* 2007, vol. 26, 202-208